**Europäisches Patentamt**

**European Patent Office**

**Office européen des brevets**

(11) Veröffentlichungsnummer: **0 064 620**
**B1**

(12) **EUROPÄISCHE PATENTSCHRIFT**

(45) Veröffentlichungstag der Patentschrift:
**31.07.85**

(21) Anmeldenummer: **82103272.9**

(22) Anmeldetag: **19.04.82**

(51) Int. Cl.⁴: **C 12 H 1/04,** B 01 J 20/14,
C 01 B 33/12

(54) Kieselsäure für die Filtration von Getränken, insbesondere von Bier sowie Verfahren zur Herstellung.

(30) Priorität: **02.05.81 DE 3117345**

(43) Veröffentlichungstag der Anmeldung:
**17.11.82 Patentblatt 82/46**

(45) Bekanntmachung des Hinweises auf die Patenterteilung:
**31.07.85 Patentblatt 85/31**

(84) Benannte Vertragsstaaten:
**AT BE CH FR GB LI LU NL SE**

(56) Entgegenhaltungen:
**DE - A - 1 767 324**
**DE - A - 2 133 861**
**DE - A - 2 257 336**
**DE - B - 1 160 812**
**DE - B - 1 717 084**
**FR - A - 1 583 708**
**FR - A - 2 021 756**

**ller, The Chemistry of Silica (1979), S. 510**

(73) Patentinhaber: **Akzo GmbH,**
**Postfach 10 01 49 Kasinostrasse 19-23,**
**D-5600 Wuppertal-1 (DE)**

(72) Erfinder: **Steenken, Gerhard, Dr. Dipl.-Chem., Auf der alten Kirche 3, D-5161 Berzbuir bei Düren (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft naßgefällte, künstlich hergestellte feinteilige Kieselsäuren, welche gleichzeitig als Filterhilfsmittel und als Bierstabilisierungsmittel bei der Bierfiltration geeignet sind sowie Verfahren zu deren Herstellung.

Feinteilige Kieselsäure natürlichen Ursprungs und auch feinteilige Kieselsäuren, welche auf synthetische Weise gewonnen werden, sind seit langem bekannt.

Kieselsäure wird auf vielerlei Gebieten der Technik eingesetzt, so z. B. als Füllstoff bei natürlichem und synthetischem Kautschuk, als Pigment bei Anstrichstoffen, bei der Herstellung von pharmazeutischen oder kosmetischen Pulvern, als Substrat für Katalysatoren usw. und auch bei der Bierherstellung als Filterhilfsmittel oder als Stabilisierungsmittel, wie z. B. der DD-PS 54 671 und dem Aufsatz von Clark u. a. »The use of silica hydrogels for combried filtration and stabilisation in The Brewer, Juni 1980, Seiten 168—171« zu entnehmen ist.

Da für jedes spezielle Einsatzgebiet wegen der unterschiedlichen Anforderungen Kieselsäure mit einem bestimmten Eigenschaftsprofil erwünscht ist und bestimmte Merkmale einer Kieselsäure für den einen Verwendungszweck von Vorteil, für den anderen Verwendungszweck aber von großem Nachteil sein können, versteht es sich von selbst, daß man nicht ohne weiteres, z. B. Kieselsäure, welche ein guter Füllstoff für Elastomere ist, als Filterhilfsmittel oder Stabilisierungsmittel bei der Bierherstellung einsetzen kann. So führen auch die bekannten Herstellungsverfahren jeweils nur zu Kieselsäuren, die für ein ganz spezielles Einsatzgebiet vorteilhaft eingesetzt werden können.

Die bekannten naßgefällten synthetischen Kieselsäuren, die als Füllstoff eingesetzt werden, weisen, was ihren Einsatz bei der Bierfiltration betrifft, eine Reihe von Nachteilen auf. Sie sind in ihrem Ausgangszustand zu feinteilig, auch ist ihre mechanische Stabilität nicht ausreichend, so daß z. B. bei der Filtration nach dem Anschwemmverfahren durch die Dosierapparaturen wie Pumpen und Rührwerke, insbesondere bei der Verwendung von Kreiselpumpen, die Kieselsäure zu noch feinteiligeren Partikelchen zerteilt wird, so daß sich nach kurzer Zeit das Filter zusetzt.

Will man gleichzeitig im Durchlaufkontaktverfahren das Bier ohne Filterhilfsmittel mit Hydrogelen durch Filtration von Trübstoffen befreien und durch Adsorption von Eiweiß eine Bierstabilisierung erreichen, besteht die Gefahr, daß eine zu hohe Eiweißadsorption auftritt, wodurch das einerseits als Filterhilfsmittel, andererseits als Adsorbens wirkende Hydrogel durch adsorbiertes Eiweiß und Trübstoffe überbelastet ist, so daß nach kurzer Zeit eine sehr hohe Druckdifferenz zwischen Filterein- und -ausgang zu beobachten ist und das Filter schnell verstopft. Ganz abgesehen davon wird durch eine zu hohe Eiweißadsorption auch die Qualität des Bieres negativ beeinflußt.

Obwohl bereits eine ganze Reihe von Filterkieselguren und einige synthetisch hergestellte Kieselsäuren bekannt sind, welche bei der Bierfiltration eingesetzt werden können, besteht noch ein Bedürfnis nach verbesserter synthetisch hergestellter Kieselsäure, sowie nach Verfahren zu deren Herstellung, welche die oben geschilderten Nachteile nicht aufweisen.

Aufgabe der Erfindung ist es deshalb, eine naßgefällte synthetische feinteilige Kieselsäure zur Verfügung zu stellen, mit der im Durchlaufkontaktverfahren gleichzeitig eine Filtration des Bieres und dessen Kältestabilisierung möglich ist, ohne daß dabei das Filterhilfsmittel durch eine zu hohe Eiweißadsorption überlastet wird und die Qualität des Bieres, insbesondere die Geschmacksnote und die Schaumbildung und Schaumhaltbarkeit beeinträchtigt wird. Aufgabe der Erfindung ist es ferner, eine Kieselsäure zur Verfügung zu stellen, die eine mechanisch stabile Struktur aufweist, eine günstige Korngrößenverteilung besitzt, die eine gute Klärschärfe und eine hohe Mengenleistung in $hl/m^2 \cdot h$ zuläßt und die ferner eine völlige oder zumindestens sehr weitgehende Substitution von Filterguren gestattet.

Aufgabe der Erfindung ist es ferner, ein Verfahren zur Verfügung zu stellen, mit dem die Herstellung von feinteiliger Kieselsäure der eben erwähnten Art auf vorteilhafte Weise möglich ist.

Diese Aufgabe wird durch eine feinteilige Kieselsäure gelöst, die gleichzeitig als Filterhilfsmittel und als Bierstabilisierungsmittel bei der Bierfiltration geeignet ist, gekennzeichnet dadurch, daß sie erhältlich ist dadurch, daß man in eine wäßrige Vorlage, die bereits gelöstes Kochsalz in einer Konzentration von 0,4 bis 2 Gew.-% enthält, und wobei das Volumen der Vorlage so groß ist, daß es mindestens 33 Volumen-% bis maximal 70 Volumen-% des Endvolumens nach Durchführung der Fällung beträgt, gleichmäßig Wasserglaslösung und Säure getrennt zugibt, wobei man die Dosierung so regelt, daß der pH-Wert während der Zugabe in der Vorlage 3 bis 10 beträgt und eine Temperatur zwischen 50° C und 95° C einhält, die Kieselsäuresuspension nach Beendigung der Zugabe auf einen pH-Wert von 7 bis 4 einstellt, die erhaltene Kieselsäure filtriert, den erhaltenen Filterkuchen mit Wasser auswäscht und unter Vermeidung von starken Scherkräften unmittelbar der Trocknung zuführt und die Masse nach der Trocknung mit Hilfe einer Passiereinrichtung siebt, und dadurch Kieselsäurepartikel mit einer im wesentlichen kugelförmigen oder rotationsellipsoidischen Gestalt, einem $SiO_2$-Gehalt von mindestens 95 Gew.-%, bezogen auf bei ca. 100° C getrocknete Festsubstanz, einem $Na_2O$-Gehalt von weniger als 0,25 Gew.-%, einem pH-Wert, gemessen an einer 10%igen Aufschlämmung in Wasser von 4 bis 7, einer Oberfläche nach Carman von höchstens 100 $m^2/g$, einer Standardtestfiltrationszeit

$t_0$, wie im folgenden definiert, von 20 sec bis 6 min und einem Verhältnis $\frac{t_{120}^{1000}}{t_0}$ von 0,7 bis 6,5, wobei $t_{120}^{1000}$ die Testfiltrationszeit nach einer 120 min langen Rührbeanspruchung bei 1000 U/min ist, erhält, wobei die Rührbeanspruchung bestimmt wird dadurch, daß man in einen 2-Liter-Meßbecher von 16 cm Höhe, einem unteren Durchmesser von 12 cm und einem oberen Durchmesser von 14 cm 2 Liter Wasser und 40 g Filterhilfsmittel einfüllt und einen Rührer mit 4 Flügeln von 2 cm Länge, die eine Neigung gegen die Horizontale nach unten von 25° aufweisen, mit einer Eintauchtiefe von 8 cm in das Gefäß senkt und 120 Minuten lang mit einer konstanten Drehzahl von 1000 U/min drehen läßt.

Günstige BET-Oberflächen der feinteiligen Kieselsäure liegen zwischen 15 bis 350 m²/g, insbesondere zwischen 40 bis 60 m²/g. In einer besonders vorteilhaften Ausführungsform der Erfindung weist die Kieselsäure eine Korngrößenverteilung bestimmt nach dem Verfahren der Siebanalyse mit Ultraschall-Naßsiebsatz nach SEITZ einen Rückstand von mindestens 60% bei einer Lochgröße von 40 μm, einen Rückstand von 15 bis 30% bei einer Lochgröße von 15 μm und einen Rückstand von 1—5% bei einer Lochgröße von 5 μm auf einen Feinstanteil unter 5 μm von max. 5%.

Zur Herstellung der oben beschriebenen erfindungsgemäßen feinteiligen Kieselsäure kann ein Verfahren dienen, das dadurch gekennzeichnet ist, daß man in eine wäßrige Vorlage, die bereits gelöstes Kochsalz in einer Konzentration von 0,4 bis max. 2 Gew.-% enthält, und wobei das Volumen der Vorlage so groß ist, daß es mindestens 33 Volumen-% bis max. 70% des Endvolumens nach Durchführung der Fällung beträgt, gleichmäßig Wasserglaslösung und Säure getrennt zugibt, wobei man die Dosierung so regelt, daß der pH-Wert während der Zugabe in der Vorlage 3 bis 10 beträgt und eine Temperatur zwischen 50°C und 95°C einhält, die Kieselsäuresuspension nach Beendigung der Zugabe auf einen pH-Wert von 7 bis 4 einstellt, die erhaltene Kieselsäure filtriert, den erhaltenen Filterkuchen mit Wasser auswäscht und unter Vermeidung von stärkeren Scherkräften unmittelbar der Trocknung zuführt und die Masse nach der Trocknung mit Hilfe einer Passiereinrichtung siebt. Vorzugsweise beträgt das Volumen der Vorlage mindestens 50 Volumen-% des Endvolumens nach Durchführung der Fällung. Als Säure zur Fällung ist Schwefelsäure sehr geeignet. Zum Sieben können Bürstenpassiersiebe verwendet werden. Vorteilhaft ist es, wenn die verwendeten Siebe eine Maschenweite von 1 bis 2 mm besitzen.

Unter Passiereinrichtungen versteht man als Siebhilfen bekannte Vorrichtungen, die zur Passierung oder Tolerierung bzw. Auflockerung entsprechender Produkte dienen. Geeignete Passiereinrichtungen werden z. B. in dem Prospekt der Fa. Allgaier-Werke GmbH, D-7336 Uhingen/Württ., »Taumelsiebmaschinen«, Seite 3, Prospekt Nr. AVA 4510/579/3000 D, beschrieben.

Die Standardtestfiltrationszeit wird nach der folgenden näher erläuterten Methode bestimmt.

Zur Durchführung der Messung werden benötigt z. B. ein Einschichtenfilter der Fa. SEITZ-Filterwerke Theo und Geo Seitz, D 6550 Bad Kreuznach, Preßluft, ein Manometer mit genauer Einteilung, Filterpapier Mn 615 mit einem Durchmesser von 15 cm der Fa. Macharei und Nagel, Werkstr. 6, 5160 Düren, oder ein Papier gleicher Qualität, ein Zweiliter-Meßbecher, ein Zweiliter-Meßzylinder und eine Stoppuhr.

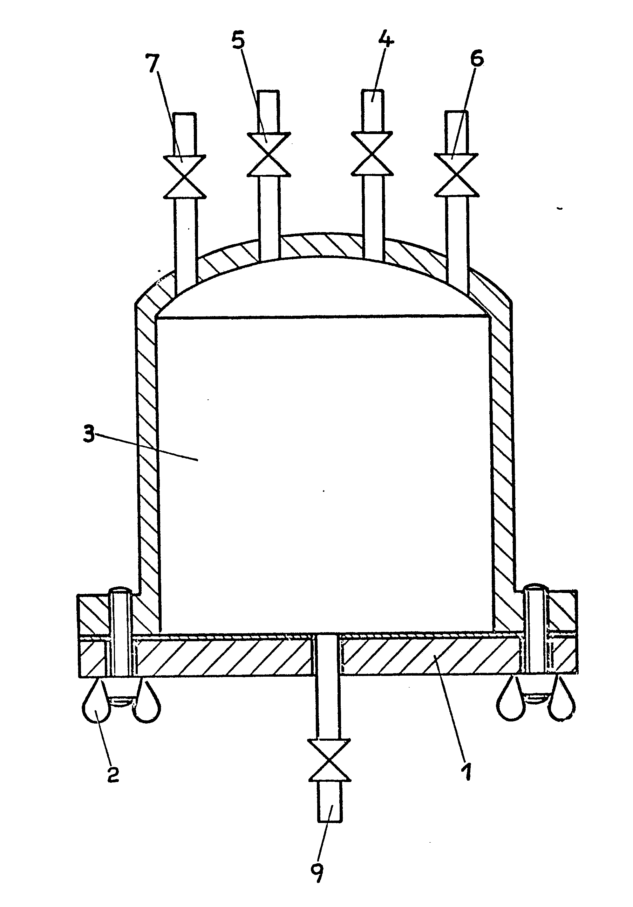

Die Arbeitsweise wird an Hand der schematischen Figur näher erläutert. Zur Messung steht das Filtrationsgerät in senkrechter Stellung und ist vorzugsweise mit Hilfe eines Stativs befestigt. Das Filterunterteil (1) wird durch Öffnung der 6 Klappschrauben (2) gelöst, sodann wird das Filterpapier in das abgenommene Filterunterteil so eingelegt, daß die glatte Seite des Papiers dem Siebteller zugewandt und die Siebseite des Papiers (rauhe Seite) nach oben zeigt. Nun schraubt man das Filter so zusammen, daß man je zwei gegenüberliegende Flügelmuttern gleichzeitig und gleichmäßig anzieht. Über den Gashahn (6) kann das Filtrationsgerät nach Füllung und Verschluß mittels Preßluft aus einer Stahlflasche oder einem Kompressor mit einem Reduzierventil mit Manometer auf einem konstanten Überdruck von 0,5 bar eingestellt werden. Der Druck ist zuerst bei geschlossenem Gashahn (6) auf 0,5 bar Überdruck einzustellen. Es werden 40 g Filterhilfsmittel in 2 Liter Leitungswasser in einem 2-Liter-Meßbecher durch Rühren mit einem Glasstab aufgeschlämmt und durch die Einfüllöffnung (4) in den Aufgußraum (3) bei offenem Gashahn (7) gegeben. Jetzt verschließt man die Einfüllöffnung (4) und den Gashahn (7). Beim Öffnen des Gashahns (6) wird das Filtrationsgerät unter Druck gesetzt und gleichzeitig eine Stoppuhr in Betrieb gesetzt. Während der Filtration muß der Druck von 0,5 bar Überdruck konstant gehalten werden. Sollten Druckschwankungen auftreten, müssen diese durch Nachregulieren am Reduzierventil ausgeglichen werden. Vor Ende der Filtration wird der Filtratablauf unregelmäßig. Kurz danach wird deutlich hörbar Gas durch den Ablauf geblasen. Jetzt ist die Stoppuhr zu drücken. Die abgelesene Zeit ist die Standardtestfiltrationszeit $t_0$. In der Figur bedeuten 9 der Ablauf des Gerätes und 5 ein Ventil.

Das Verhältnis $\frac{t_{120}^{1000}}{t_0}$ ist ein Maß für die Stabilität des Filterhilfsmittels und gibt Auskunft darüber, inwieweit das Filtermittel während der Filtration gegenüber Scherbeanspruchungen verändert wrid. Die Testfiltrationszeit $t_{120}^{1000}$ wird nach der gleichen Methode und mit der gleichen Meßeinrichtung ermittelt wie die Standardtestfiltrationszeit $t_0$. Im Unterschied zu der Bestimmung von $t_0$, bei der Gure oder Kieselsäuren im Anlieferungszustand untersucht werden, wird bei der Bestimmung von $t_{120}^{1000}$ die angelieferte Gur bzw. das Filterhilfsmittel, und zwar ebenfalls 40 g, in 2 Liter Wasser aufgeschlämmt und sodann 120 Minuten mit einem Rührer bei 1000 U/ min einer Scherbeanspruchung unterworfen. Liegen die $t_{120}^{1000}$-Werte höher als der $t_0$-Wert, so ist das ein Hinweis darauf, daß während der Scherbeanspruchung Kieselsäureteilchen noch stärker zerkleinert wurden, so daß das Filterhilfsmittel noch feinpulvriger wurde. Ist die Zeit $t_{120}^{1000}$ kleiner als $t_0$, so weist das darauf hin, daß kleinere Teilchen zu größeren agglomerierten oder kleinere Teilchen von größeren Teilchen adsorbiert wurden.

Die Scherbeanspruchung für die Bestimmung des $t_{120}^{1000}$-Wert wird auf folgende Weise durchgeführt.

In einen 2-Liter-Meßbecher von 16 cm Höhe, einem unteren Durchmesser von 12 cm und einem oberen Durchmesser von 14 cm werden 2 Liter Wasser und 40 g Filterhilfsmittel eingefüllt. Ein Rührer mit 4 Flügeln von 2 cm Länge, die eine Neigung gegen die Horizontale nach unten von 25° aufweisen, wird mit einer Eintauchtiefe von 8 cm in das Gefäß gesenkt und 120 Minuten lang mit einer konstanten Drehzahl von 1000 U/min gedreht. Die Testfiltration erfolgt unmittelbar danach.

Die Bestimmung der Korngrößenverteilung nach SEITZ ist näher in dem Aufsatz von Schöffel und Schäfer, »Versuche zur Charakterisierung von Kieselguren« in Brauwelt Nr. 18 vom 1. Mai 1980 beschrieben. Bei diesem Verfahren werden als Siebe dünne Bleche eingesetzt, in die nach einem galvanisch arbeitenden Verfahren rechteckige Löcher von der Größe 5,15 bzw. 40 µm eingearbeitet sind. Mit derartigen Sieben ist ein genaueres Bestimmen möglich als mit gewebten Siebböden, die eine erheblich größere statistische Streuung der Maschenweiten aufweisen.

Das Verfahren zur Herstellung der erfindungsgemäßen feinteiligen Kieselsäure kann z. B. wie folgt durchgeführt werden.

Zunächst wird eine Vorlage durch Lösen von Natriumchlorid in Wasser hergestellt. Das Wasser sollte mindestens Trinkwasserqualität besitzen. Das Kochsalz soll eine Konzentration von etwa 0,4 bis max. 2 Gew.-% aufweisen. Das Volumen der Vorlage beträgt mindestens 33, vorzugsweise mindestens 50 bis max. 70% des Endvolumens, welches nach Durchführung der vollständigen Zugabe der Wasserglaslösung und Säure vorliegt. Durch Variieren der Menge des Vorlagevolumens ist es möglich, die Oberflächen der erhaltenen Kieselsäure zu steuern. Im allgemeinen werden durch Vergrößerung des Vorlagevolumens bei gleicher Salzmenge, d. h. bei gleichzeitig fallender Anfangskonzentration des Kochsalzes, die Oberflächen vergrößert; eine Erhöhung der Kochsalzkonzentration bei gleich großer Vorlage führt zu gröberer Körnung und kleineren BET- und Carman-Oberflächen.

Der pH-Wert der Vorlage soll zu Beginn der Dosierung zwischen 3 bis 10 liegen, vorzugsweise zwischen 5 bis 10. Dieser Wert wird während der getrennten Zudosierung von Wasserglaslösung und Säure kontrolliert und innerhalb der angegebenen, insbesondere der bevorzugten Grenzen gehalten. Die Temperatur wird so geregelt, daß sie zwischen 50 und 95°C liegt. Nach Beendigung der Dosierung wird der pH-Wert, sofern er nicht bereits in diesem Bereich liegt, auf 7 bis 4 eingestellt.

Die Filtration der Kieselsäuresuspension findet zweckmäßig mit Hilfe von Filterpressen statt. Dadurch und durch die Parameter der Fällrezeptur wird insbesondere ein verhältnismäßig hoher Feststoffgehalt erreicht, was sich bei der anschließenden Trocknung vorteilhaft bemerkbar macht.

Die abfiltrierte Kieselsäure wird in üblicher Weise mit Wasser gewaschen. Der Feststoffgehalt des Filterkuchens beträgt etwa 25 bis 50%. Die abfiltrierte Kieselsäure wird sodann unmittelbar der Trocknung zugeführt. Dabei ist darauf zu achten, daß dies unter Vermeidung von stärkeren Scherkräften geschieht. Stärkere Scherkräfte können z. B. dadurch auftreten, daß das Material mit Schnecken transportiert wird oder sonstigen stärkeren mechanischen Kräften vor der Trocknung ausgesetzt wird. Zweckmäßigerweise wird die Kieselsäure aus der Filterpresse direkt auf ein Förderband geführt und auf diesem Förderband der Trocknung zugeführt. Es ist günstig, wenn man dabei Förderbänder einsetzt, die durch den Trocknungsofen geführt werden können, so daß die Trocknung direkt auf dem Förderband stattfindet. Durch diese Art und Weise werden Scherkräfte, wie sie z. B. durch Eigendruck und Vibration während der Zwischenlagerungen entstanden können, vermieden. Das getrocknete Material wird nach dem Verlassen des Trockenofens einem Siebvorgang zugeführt. Dabei werden Siebe verwendet, die nach Art der Passiersiebe arbeiten. Besonders günstig ist eine Bürstensiebmaschine.

Es war besonders überraschend, daß die auf diese Weise hergestellten Kieselsäuren sich problemlos sieben lassen und dabei in der gewünschten Feinheit und Korngrößenverteilung durch das Sieb passieren, ohne daß das getrocknete Material gemahlen werden müßte.

Zum Dosieren kann eine übliche Wasserglaslösung von Konzentrationen von beispielsweise 8 bis 27% eingesetzt werden. Zur Neutralisation bzw. Fällung wird eine Säure, vorzugsweise Schwefelsäure, eingesetzt. Es ist günstig, wenn die Säure eine Konzentration von 2 n bis 6 n aufweist.

Während der Zugabe von Wasserglaslösung und Säure wird zweckmäßigerweise gerührt. Vorzugsweise wird etwa 95% der gesamten Menge an Wasserglaslösung und Säure während einer Zeit von etwa 2 Stunden zudosiert, sodann wird durch Zugabe der restlichen Säuremenge der pH-Wert auf z. B. 4 oder 5 gesenkt und die restlichen 5% Wasserglas hinzugefügt. Nach Ende der Zugabe wird noch eine Zeitlang nachgerührt, z. B. 15—30 Minuten. Die Supension kann dann sofort filtriert werden.

Die Konzentration von Kieselsäure, berechnet als $SiO_2$ im Endvolumen der Suspension kann innerhalb verhältnismäßig weiter Grenzen variieren; günstige Konzentrationen sind z. B. 70—95 g

SiO$_2$/l.

Zur Filtration eignen sich übliche Filterpressen.

Es war besonders überraschend, daß sich gemäß der Erfindung feinteilige Kieselsäure herstellen läßt, die sich sowohl als Filterhilfsmittel als auch als Stabilisierungsmittel während der Bierfiltration einsetzen läßt, vor allem, da nach den bisherigen Kenntnissen für die Eiweißadsorption Oberflächen von 350—800 m$^2$/g und eine große Mahlfeinheit notwendig war, d. h. mindestens 99% der Teilchen sollten maximal einen Korndurchmesser von 40 μm aufweisen.

Die gewünschte Korngrößenverteilung wird durch die Fällrezeptur und einfaches Sieben der getrockneten Masse erhalten; ein Mahlen der getrockneten Masse ist nicht erforderlich und meistens auch unerwünscht.

Die Kieselsäure gemäß der Erfindung läßt sich auch in idealer Weise mit Kieselgur zusammen verarbeiten und ist außerdem besonders geeignet, grobe bis mittelfeine Kieselgure ganz oder teilweise zu substituieren. Gegenüber Kieselgur weist die Kieselsäure gemäß der Erfindung u. a. den Vorteil auf, daß sie mit konstanter Qualität hergestellt werden kann, eisenfrei ist und keine lungenschädlichen kristallinen Bestandteile wie Quarz enthält und nicht, wie das bei den natürlich vorkommenden Kieselguren der Fall ist, von Herkunft zu Herkunft und von Lieferung zu Lieferung unterschiedliche Eigenschaften besitzt.

Die Kieselsäure gemäß der Erfindung ist mechanisch sehr stabil; sie läßt sich sowohl während der Anschwemmung, und zwar bei der 1. und 2. Anschwemmung, problemlos einsetzen als auch für die Dosierung verwenden. Aufgrund der hervorragenden Oberflächenstruktur besitzt das Material eine sehr gute Klärschärfe und Filtratmengenleistung und ist deshalb für die Filtration von Bier und für die gleichzeitige Stabilisierung des Biers im Durchlauf-Kontaktverfahren hervorragend geeignet. Eine unerwünschte Adsorbtion von Bierinhaltsstoffen findet nicht statt.

Die erfindungsgemäße Kieselsäure erlaubt hohe Filterstandzeiten; der Kuchenaufbau ist ausgezeichnet und das für die Klärschärfe und die Filterstandzeit bedeutsame Zwischenkornvolumen ist sehr günstig.

Die Erfindung wird an Hand der folgenden Beispiele näher erläutert:

### Beispiel 1

In einer Vorlage von 8 l Leitungswasser werden 160 g Kochsalz gelöst und auf 60°C erhitzt. Unter Rühren werden 3,75 l Wasserglas mit 27 Gew.-% SiO$_2$ pro Liter und einem Molverhältnis Na$_2$O zu SiO$_2$ von 1 : 3,3 und verdünnte Schwefelsäure (aus 417 ml 95%iger H$_2$SO$_5$ und 2,09 l Wasser) getrennt bei einem pH von 10,0 innerhalb 2 Stunden zugegeben.

Mit ca. 100 ml der gleichen verdünnten Schwefelsäure wird auf einen End-pH von 5 eingestellt. Die Nachrührzeit zur Konstanthaltung des pH-Werts 5 beträgt ca. 15 Minuten. Anschließend wird filtriert und mit Wasser gewaschen. Der Feststoffgehalt auf der Nutsche beträgt 35,2 Gew.-%. Das unter Vermeidung von Scherkräften transportierte und getrocknete Produkt enthält 0,5% Gesamtelektrolyt. Die Carman-Oberfläche beträgt 31 m$^2$/g, die BET-Oberfläche ist 232 m$^2$/g. t$_0$ ist 85 sec und t$_{120}^{1000}$ 332 sec. Daraus errechnet sich ein Wert von t$_{120}^{1000}$/t$_0$ von 3,73.

### Beispiel 2

In analoger Weise wurde unter Verwendung einer Vorlage von 8 l Wasser und 80 g Kochsalz, gefällt bei pH 8 aus 3,8 l Wasserglas (Qualität wie in Beispiel 1) 400 ml 95%iger Schwefelsäure in 3,2 l Wasser, Fällzeit 2 Stunden, Kieselsäure gewonnen. Der Feststoffgehalt beträgt 37,8%. Die Carman-Oberfläche 27 m$^2$/g, die BET-Oberfläche 57 m$^2$/g, der Elektrolytgehalt 0,1%. t$_0$ ist 34 sec und t$_{120}^{1000}$ = 176 sec, t$_{120}^{1000}$/t$_0$ = 5,18.

### Vergleichsbeispiel

In gleicher Weise wie Beispiel 2, jedoch unter Einsatz von 80 g wasserfreiem Na$_2$SO$_4$ als Salz wird Kieselsäure unter Verwendung von Schwefelsäure gefällt. t$_0$ dieser Kieselsäure beträgt 91 sec, t$_{120}^{1000}$ 990 sec.

### Patentansprüche

1. Feinteilige Kieselsäure, die gleichzeitig als Filterhilfsmittel und als Bierstabilisierungsmittel bei der Bierfiltration geeignet ist, gekennzeichnet dadurch, daß sie erhältlich ist dadurch, daß man in eine wäßrige Vorlage, die bereits gelöstes Kochsalz in einer Konzentration von 0,4 bis 2 Gew.-% enthält, und wobei das Volumen der Vorlage so groß ist, daß es mindestens 33 Volumen-% bis maximal 70 Volumen-% des Endvolumens nach Durchführung der Fällung beträgt, gleichmäßig Wasserglaslösung und Säure getrennt zugibt, wobei man die Dosierung so regelt, daß der pH-Wert während der Zugabe in der Vorlage 3 bis 10 beträgt und eine Temperatur zwischen 50°C und 95°C einhält, die Kieselsäuresuspension nach Beendigung der Zugabe auf einen pH-Wert von 7 bis 4 einstellt, die erhaltene Kieselsäure filtriert, den erhaltenen Filterkuchen mit Wasser auswäscht und unter Vermeidung von starken Scherkräften unmittelbar der Trocknung zuführt und die Masse nach der Trocknung mit Hilfe einer Passiereinrichtung siebt, und dadurch Kieselsäurepartikel mit einer im wesentlichen kugelförmigen oder rotationsellipsoidischen Gstalt, einem SiO$_2$-Gehalt von mindestens 95 Gew.-%, bezogen auf bei ca. 100°C getrocknete Festsubstanz, einem Na$_2$O-Gehalt von weniger als 0,25 Gew.-%, einem pH-Wert, gemessen an einer 10%igen Aufschlämmung in Wasser von 4 bis 7, einer Oberfläche nach Carman von höchstens 100 m²/g, einer Standardtestfiltrationszeit $t_0$, wie im folgenden definiert, von 20 sec bis 6 min und einem Verhältnis $\frac{t_{120}^{1000}}{t_0}$ von 0,7 bis 6,5, wobei $t_{120}^{1000}$ die Testfiltrationszeit nach einer 120 min langen Rührbeanspruchung bei 1000 U/min ist, erhält, wobei die Rührbeanspruchung bestimmt wird dadurch, daß man in einen 2-Liter-Meßbecher von 16 cm Höhe, einem unteren Durchmesser von 12 cm und einem oberen Durchmesser von 14 cm 2 Liter Wasser und 40 g Filterhilfsmittel einfüllt und einen Rührer mit 4 Flügeln von 2 cm Länge, die eine Neigung gegen die Horizontale nach unten von 25° aufweisen, mit einer Eintauchtiefe von 8 cm in das Gefäß senkt und 120 Minuten lang mit einer konstanten Drehzahl von 1000 U/min drehen läßt.

2. Feinteilige Kieselsäure nach Anspruch 1, gekennzeichnet durch einen SiO₂-Gehalt von mindestens 99 Gew.-%.

3. Feinteilige Kieselsäure nach den Ansprüchen 1 oder 2, gekennzeichnet durch ein Verhältnis $\frac{t_{120}^{1000}}{t_0}$ von 1,0 bis 4,0.

4. Feinteilige Kieselsäure nach einem der Ansprüche 1 bis 3, gekennzeichnet durch eine Testfiltrationszeit $t_{120}^{1000}$ von max. 10 min.

5. Feinteilige Kieselsäure nach einem der Ansprüche 1 bis 4, gekennzeichnet durch eine Oberfläche nach Carman von höchstens 80 m²/g.

6. Feinteilige Kieselsäure nach einem der Ansprüche 1 bis 5, gekennzeichnet durch eine Standardtestfiltrationszeit $t_0$ von 30 bis 150 sec.

7. Feinteilige Kieselsäure nach einem der Ansprüche 1 bis 6, gekennzeichnet durch eine BET-Oberfläche von 15 bis 350 m²/g.

8. Feinteilige Kieselsäure nach Anspruch 7, gekennzeichnet durch eine BET-Oberfläche von 40 bis 60 m²/g.

9. Feinteilige Kieselsäure nach einem der Ansprüche 1 bis 8, gekennzeichnet durch eine Korngrößenverteilung bestimmt nach dem Verfahren der Siebanalyse mit Ultraschall-Naßsiebsatz nach SEITZ mit einem Rückstand von mindestens 60% bei einer Lochgröße von 40 μm, einem Rückstand von 15 bis 30%, bei einer Lochgröße von 15 μm und einem Rückstand von 1 bis 5%, bei einer Lochgröße von 5 μm und einem Feinstanteil unter 5 μm von höchstens 5%.

10. Verfahren zur Herstellung feinteiliger Kieselsäure nach einem der Ansprüche 1 bis 9, dadurch gekennzeichnet, daß man in eine wäßrige Vorlage, die bereits gelöstes Kochsalz in einer Konzentration von 0,4 bis 2 Gew.-% enthält, und wobei das Volumen der Vorlage so groß ist, daß es mindestens 33 Volumen-% bis max. 70 Volumen-% des Endvolumens nach Durchführung der Fällung beträgt, gleichmäßig Wasserglaslösung und Säure getrennt zugibt, wobei man die Dosierung so regelt, daß der pH-Wert während der Zugabe in der Vorlage 3 bis 10 beträgt und eine Temperatur zwischen 50°C und 95°C einhält, die erhaltene Kieselsäure filtriert, den erhaltenen Filterkuchen mit Wasser auswäscht und unter Vermeidung von stärkeren Schwerkräften unmittelbar der Trocknung zuführt und die Masse nach der Trocknung mit Hilfe einer Passiereinrichtung siebt.

11. Verfahren nach Anspruch 10, dadurch gekennzeichnet, daß das Volumen der Vorlage mindestens 50 Volumen-% des Endvolumens nach Durchführung der Fällung beträgt.

12. Verfahren nach den Ansprüchen 10 oder 11, dadurch gekennzeichnet, daß man als Säure Schwefelsäure verwendet.

13. Verfahren nach einem der Ansprüche 9 bis 12, dadurch gekennzeichnet, daß man zum Sieben Bürstenpassiersiebe verwendet.

14. Verfahren nach einem der Ansprüche 9 bis 13, dadurch gekennzeichnet, daß man Siebe mit einer Maschenweite von 1 bis 2 mm verwendet.

**Claims**

1. Finely-divided silica which is, at the same time, suitable as a filtration auxiliary and as a beer stabilizer in the filtration of beer, characterised in that it is obtained by gradually adding waterglass and acid separately to an aqueous starting solution which contains dissolved sodium chloride in an amount of from 0.4 to 2% by weight, the volume of the starting solution being from at least 33%, by volume to at most 70% by volume, of the final volume on completion of precipitation, the metering operation being adjusted so that, during addition to the starting solution, the pH is from 3 to 10 and the temperature is from 50 to 95° C, the silica suspension is adjusted to a pH of from 7 to 4 on completion of addition, the resulting silica is filtered, the resulting filter cake is washed with water and is immediately dried while avoiding substantial shearing forces and the mass is sieved after drying using a sieving apparatus, and silica particles are thereby obtained having a substantially spherical or rotationally ellipsoidal form, a minimum SiO₂ content of 95% by weight, on a dry solids basis at about 100° C, an Na₂O content of less than 0.25% by weight, a pH, measured on a 10% suspension in water, of from 4 to 7, a maximum Carman surface area of 100 m²/g, a standard test filtration time $t_0$, as defined in the following, of from 20 sec to 6 min and a ratio $\frac{t_{120}^{1000}}{t_0}$ of from 0.7 to 6.5, wherein $t_{120}^{1000}$ represents the test filtration time after stir stressing for 120 min at 1000 rpm, the stirring stress being determined by pouring 2 litres of water and 40 g of filtration auxiliary into a 2-litre measuring vessel which is 16 cm in height, has a bottom diameter of 12 cm and a top diameter of 14 cm, and lowering a stirring device having 4 blades 2 cm in length, which are inclined downwardly with respect to the horizontal at an angle of 25° C, into the vessel to a depth of immersion of 8 cm and allowing it to rotate for 120 min at a constant speed of 1000 rpm.

2. Finely-divided silica according to claim 1, characterised by a minimum SiO₂ content of 99%, by weight.

3. Finely-divided silica according to claims 1 or 2, characterised by a ratio $\frac{t_{120}^{1000}}{t_0}$ of from 1.0 to 4.0.

4. Finely-divided silica according to one of claims 1 to 3, characterised by a maximum test filtration time $t_{120}^{1000}$ of 10 min.

5. Finely-divided silica according to one of claims 1 to 4, characterised by a maximum Carman surface area of 80 m²/g.

6. Finely-divided silica according to one of claims 1 to 5, characterised by a standard test filtration time $t_0$ of from 30 to 150 sec.

7. Finely-divided silica according to one of claims 1 to 6, characterised by a BET surface area of from 15 to 350 m²/g.

8. Finely-divided silica according to claim 7, characterised by a BET surface area of from 40 to 60 m²/g.

9. Finely-divided silica according to one of claims 1 to 8, characterised by a grain size distribution determined by the SEITZ process of screen analysis using an ultrasonic wet sieve set, as follows: a residue of at least 60% with a mesh size of 40 μm, a residue of from 15 to 30% with a mesh size of 15 μm, and a residue of from 1 to 5% with a mesh size of 5 μm and a proportion of superfine particles of less than 5 μm of at most 5%.

10. A process for the production of finely-divided silica according to one of claims 1 to 9, characterised in that waterglass and acid are gradually added separately to an aqueous starting solution which contains dissolved sodium chloride in an amount of from 0.4 to 25%, by weight, the volume of the starting solution being from at least 33% by volume, to at most 70% by volume of the final volume on completion of precipitation, the metering operation during addition to the starting solution being adjusted so that the pH, is from 3 to 10 and the temperature is from 50 to 90°C, the resulting silica is filtered, the resulting filter cake is washed with water and is immediately dried while avoiding relatively substantial shearing forces and the mass is sieved after drying using a sieving apparatus.

11. A process according to claim 10, characterised in that the volume of the starting solution is at least 50%, by volume, of the final volume on completion of precipitation.

12. A process according to claim 10 or claim 11, characterised in that sulphuric acid is used as the acid.

13. A process according to one of claims 9 to 12, characterised in that brush sieves are used for sieving.

14. A process according to one of claims 9 to 13, characterised in that sieves having a mesh of from 1 to 2 mm are used.

**Revendications**

1. Acide silicique finement divisé qui, pour la filtration de la bière, est approprié simultanément comme auxiliaire de filtration et comme stabilisant de la bière, caractérisé par le fait qu'il est obtenu en ajoutant séparément simultanément une solution d'ortho-silicate et un acide dans un milieu aqueux qui contient déjà en solution du chlorure de sodium à une concentration de 0,4 à 2% en poids, le volume du milieu étant calculé de façon à ce qu'on ait 33% en volume jusqu'à un maximum de 70% en volume du volume final après la réalisation de la précipitation, en règlant le dosage de façon à ce que le pH atteigne 3 à 10 pendant l'addition dans le milieu et en maintenant la température entre 50°C et 95°C, en règlant le pH de la suspension d'acide silicique de 7 à 4 une fois l'addition terminée, en filtrant l'acide silicique obtenu, en lavant le gâteau de filtre obtenu avec de l'eau et en conduisant celui-ci immédiatement au séchage tout en évitant des efforts de cisaillement trop grands puis en tamisant la masse après le séchage à l'aide d'un dispositif de tamisage, et par le fait que la particule d'acide silicique ayant un aspect particulier de sphère ou d'ellipsoïde de révolution présente une teneur en SiO₂ au minimum de 95% en poids rapporté à la substance solide séchée à environ 100°C, une teneur en Na₂O inférieure à 0,25% en poids, un Ph mesuré sur une suspension à 10% dans l'eau de 4 à 7, une surface spécifique selon Carman au maximum de 100 m²/g, une durée de filtration $t_0$ selon l'essai normalisé, tel que défini ci-après, de 20 secondes à 6 minutes et un rapport $\frac{t_{120}^{1000}}{t_0}$ de 0,7 à 6,5, $t_{120}^{1000}$ étant la durée de l'essai de filtration après des conditions d'agitation de 120 minutes à 1000 tr/minute, les conditions d'agitation étant déterminées en plaçant dans un Bécher gradué de 2 litres ayant 16 cm de haut, un diamètre inférieur de 12 cm et un diamètre supérieur de 14 cm, 2 litres d'eau et 40 g d'auxiliaire de filtration, et équipé d'un agitateur à quatre ailettes de 2 cm de long qui présentent une inclinaison vers le dessous par rapport à l'horizontal de 25°, et qui plonge dans le récipient à une profondeur de 8 cm, et qu'on fait tourner pendant 120 minutes à une vitesse constante de rotation de 1000 tr/minute.

2. Acide silicique finement divisé selon la revendication 1, caractérisé par une teneur minimum en SiO₂ de 99% en poids.

3. Acide silicique finement divisé selon les revendications 1 ou 2, caractérisé par un rapport $\frac{t_{120}^{1000}}{t_0}$ de 1 à 4.

4. Acide silicique finement divisé selon l'une des revendications 1 à 3, caractérisé par une durée d'essai de filtration $t_{120}^{1000}$ de 10 minutes maximum.

5. Acide silicique finement divisé selon l'une des revendications 1 à 4, caractérisé par une surface spécifique selon Carman au maximum de 80 m²/g.

6. Acide silicique finement divisé selon l'une des revendications 1 à 5, caractérisé par une durée de filtration $t_0$ suivant l'essai normalisé de 30 à 150 secondes.

7. Acide silicique finement divisé selon l'une des revendications 1 à 6, caractérisé par une surface spécifique BET de 15 à 350 m²/g.

8. Acide silicique finement divisé selon la revendication 7, caractérisé par une surface spécifique BET de 40 à 60 m²/g.

9. Acide silicique finement divisé selon l'une des revendications 1 à 8, caractérisé par une composition granulométrique déterminée selon le procédé de l'analyse granulométrique avec la série de tamis humide et ultrasons selon SEITZ avec un résidu au minimum de 60% pour une ouverture de maille de 40 μm, un résidu de 15 à 30% pour une ouverture de maille de 15 μm et un résidu de 1 à 5% pour une ouverture de maille de 5 μm et une fraction la plus fine inférieure à 5 μm au maximum de 5%.

10. Procédé pour la préparation d'un acide silicique finement divisé selon l'une des revendications 1 à 9, caractérisé par le fait qu'on ajoute séparément simultanément une solution d'orthosilicate et un acide dans un milieu aqueux qui contient déjà en solution du chlorure de sodium en une concentration de 0,4 à 2% en poids, le volume du milieu étant tel qu'il s'élève au moins à 33% en volume jusqu'à un maximum de 70% en volume du volume final après la réalisation de la précipitation, on règle le dosage de façon à ce que le pH soit de 3 à 10 pendant l'addition dans le milieu et on maintient une température entre 50°C et 95°C, on filtre l'acide silicilique obtenu, on lave le gâteau de filtre obtenu avec de l'eau et on le conduit immédiatement au séchage en évitant des efforts de cisaillement trop grands, et on tamise la masse après le séchage au moyen d'un dispositif de tamisage.

11. Procédé selon la revendication 10, caractérisé par le fait que le volume du milieu s'élève au moins à 50% en volume du volume final après la réalisation de la précipitation.

12. Procédé selon les revendications 10 ou 11, caractérisé par le fait qu'on utilise comme acide l'acide sulfurique.

13. Procédé selon l'une des revendications 9 à 12, caractérisé par le fait qu'on utilise pour le tamisage des tamis avec brosse.

14. Procédé selon l'une des revendications 9 à 13, caractérisé par le fait qu'on utilise des tamis ayant une largeur de maille de 1 à 2 mm.